(19) Europäisches Patentamt
European Patent Office
Office européen des brevets

(11) EP 1 224 229 B1

(12) **EUROPÄISCHE PATENTSCHRIFT**

(45) Veröffentlichungstag und Bekanntmachung des Hinweises auf die Patenterteilung:
**16.06.2004 Patentblatt 2004/25**

(21) Anmeldenummer: **00969556.0**

(22) Anmeldetag: **27.10.2000**

(51) Int Cl.[7]: **C08F 110/10**, C08F 4/14

(86) Internationale Anmeldenummer:
**PCT/EP2000/010588**

(87) Internationale Veröffentlichungsnummer:
**WO 2001/030869 (03.05.2001 Gazette 2001/18)**

(54) **VERFAHREN ZUR HERSTELLUNG VON HOCHREAKTIVEN POLYISOBUTENEN**

METHOD FOR THE PRODUCTION OF HIGHLY REACTIVE POLYISOBUTENES

PROCEDE POUR PRODUIRE DES POLYISOBUTENES A REACTIVITE ELEVEE

(84) Benannte Vertragsstaaten:
**AT BE CH CY DE DK ES FI FR GB GR IE IT LI LU MC NL PT SE**

(30) Priorität: **28.10.1999 DE 19952030**

(43) Veröffentlichungstag der Anmeldung:
**24.07.2002 Patentblatt 2002/30**

(73) Patentinhaber: **BASF AKTIENGESELLSCHAFT**
**67056 Ludwigshafen (DE)**

(72) Erfinder:
- **RATH, Hans, Peter**
  **67269 Grünstadt (DE)**
- **HAHN, Dieter**
  **67316 Carlsberg (DE)**
- **SANDROCK, Gerhard**
  **67227 Frankenthal (DE)**
- **VAN DEYCK, Frans**
  **B-2910 Essen (BE)**
- **VANDER STRAETEN, Bart**
  **B-3191 Hever (BE)**
- **DE VREE, Eddy**
  **B-2940 Stabroek (BE)**

(74) Vertreter: **Kinzebach, Werner, Dr. et al**
**Ludwigsplatz 4**
**67059 Ludwigshafen (DE)**

(56) Entgegenhaltungen:
**EP-A- 0 807 641**
**EP-A- 0 904 844**
**DE-A- 19 747 268**
**US-A- 5 286 823**
**US-A- 5 408 018**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 224 229 B1

Printed by Jouve, 75001 PARIS (FR)

## Beschreibung

Die Erfindung betrifft ein Verfahren zur Herstellung von Polyisobutenen sowie eine für das Verfahren ausgebildete Zweistoffdüse.

Hochmolekulare Polyisobutene mit Molekulargewichten bis zu mehreren 100.000 Dalton sind seit langem bekannt. Diese Polyisobutene werden meist mit Hilfe von Lewis-Säure-Katalysatoren, wie Aluminiumchlorid, Aluminiumalkylchloriden oder Bortrifluorid hergestellt und weisen meist weniger als 10 Mol-% endständige Doppelbindungen (Vinylidengruppierungen) und eine breite Molekulargewichtsverteilung, charakterisiert durch eine Dispersität zwischen 2 und 5 auf. Die Dispersität D ist definiert als der Quotient aus gewichtsmittlerem Molekulargewicht $M_w$ geteilt durch das zahlenmittlere Molekulargewicht $M_n$ ($D = M_w/M_n$).

Von diesen herkömmlichen Polyisobutenen sind die sogenannten hochreaktiven Polyisobutene zu unterscheiden, welche in der Regel mittlere Molmassen von 500 bis 5.000 Dalton und einen hohen Gehalt an endständigen Vinylidengruppierungen von vorzugsweise über 60 Mol-% haben. Unter endständigen Vinylidengruppierungen oder endständigen Doppelbindungen werden im Sinne der vorliegenden Anmeldung solche Doppelbindungen verstanden, deren Lage im Polyisobutenmakromolekül durch die allgemeine Formel

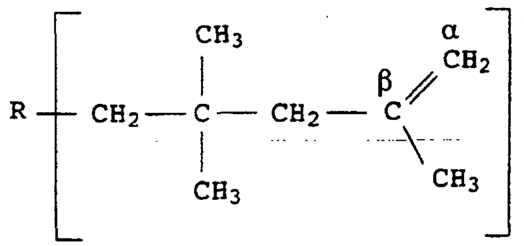

beschrieben wird, in der R für einen um zwei Isobuteneinheiten verkürzten Polyisobutenrest steht. Die Art und der Anteil der im Polyisobuten vorhandenen Doppelbindungen kann mit Hilfe von $^{13}$C-MR-Spektroskopie bestimmt werden.

Solche hochreaktiven Polyisobutene werden als Zwischenprodukt zur Herstellung von Additiven für Schmier- und Kraftstoffe verwendet, wie sie beispielsweise in der DE-A 27 02 604 beschrieben sind.
Die höchste Reaktivität zeigen die endständigen Vinylidengruppen, wohingegen die weiter im Inneren der Makromoleküle liegenden Doppelbindungen je nach ihrer Lage im Makromolekül keine oder nur eine geringe Reaktivität in den üblichen Funktionalisierungsreaktionen zeigen. Der Anteil an endständigen Vinylidengruppierungen im Molekül ist daher das wichtigste Qualitätskriterium für diesen Polyisobutentypus.

Die Herstellung hochreaktiver Polyisobutene erfolgt durch $BF_3$-katalysierte, kationische Polymerisation von Isobuten. Eigentlicher Katalysator ist ein Komplex aus Bortrifluorid und wenigstens einer zur Komplexbildung mit $BF_3$ befähigten Verbindung. Diese Verbindung ist in der Regel ausgewählt unter sauerstoffhaltigen Verbindungen mit wenigstens einem zweibindigen Sauerstoffatom, z.B. Wasser, Alkoholen, Ethern und Carbonsäuren, und wird als Cokatalysator bezeichnet.

Weitere Qualitätskriterien für Polyisobutene sind deren mittleres Molekulargewicht und die Molekulargewichtsverteilung, auch als Dispersität bezeichnet, der im Polyisobuten enthaltenen Makromoleküle. Im Allgemeinen werden Polyisobutene mit mittleren Molekulargewichten ($M_n$) von 500 bis 50.000 Dalton angestrebt. Für die Herstellung von Kraftstoffadditiven verwendeten Polyisobutene werden wegen ihrer besseren Wirksamkeit Molekulargewichte von 500 bis 5.000, vorzugsweise 600 bis 3.000, insbesondere 700 bis 2.500 Dalton bevorzugt.

Weiterhin wird eine enge Molekulargewichtsverteilung der Polyisobutenmoleküle angestrebt, um den Anteil an unerwünschten, relativ nieder- oder hochmolekularen Polyisobutenen im erzeugten Produkt zurückzudrängen und so dessen Qualität zu verbessern.

Aus der EP 0 481 297 A2 ist ein Verfahren zur Herstellung von Polyisobuten bekannt. Dabei werden Isobuten und/oder isobutenhaltige Kohlenwasserstoffe in Gegenwart eines Polymerisationskatalysators hergestellt, der aus einem Komplex aus $BF_3$ und einem Alkohol besteht. Der Komplex wird separat von der Polymerisationsreaktion durch Einleiten, Eingasen oder Aufpressen von $BF_3$ in den jeweiligen Alkohol, gegebenenfalls in einem inerten Lösungsmittel, hergestellt und anschließend der Polymerisation des Isobutens zugeführt. Außerdem wird vorgeschlagen, zusätzlichen Komplexbildner mit einem getrennten Mengenstrom oder im Lösungsmittel, dem Isobuten oder in den isobutenhaltigen Kohlenwasserstoffen zuzuführen. Die Herstellung des Bortrifluoridkomplex-Katalysators erfolgt jedoch stets in einer separaten Reaktion und ist daher aufwendig. Aufgrund der Exothermie der Komplexbildung sind zusätzlich Kühlungsvorrichtungen erforderlich.

In der EP 0 628 575 A1 wird ein Verfahren zur Herstellung hochreaktiver Polyisobutene beschrieben. Die Polymerisation findet bei einer Temperatur von 0°C bis -60°C in Gegenwart von Bortrifluorid und sekundären Alkoholen

mit 3 bis 20 Kohlenstoffatomen statt. Neben einer separaten Herstellung des Bortrifluoridkomplexes mit nachfolgender Einleitung in den Reaktionsstrom wird auch eine Erzeugung des Komplexes in situ vorgeschlagen. Dazu wird der betreffende sekundäre Alkohol, gegebenenfalls gemeinsam mit einem Lösungsmittel und zusammen mit dem Isobuten in die Polymerisationsapparatur eingespeist und Bortrifluorid in der erforderlichen Menge in dieser Mischung der Reaktanden dispergiert, in der es sich mit dem Alkohol zum Bortrifluoridkomplex-Katalysator umsetzt.

Bei dem Verfahrens des Standes der Technik mit in situ-Herstellung des Bortrifluoridkomplex-Katalysators ist eine gezielte Einstellung des Verhältnisses von $BF_3$ und Komplexbildner, im Folgenden als Cokatalysator bezeichnet, in der Reaktionsmischung problematisch. Konzentrationsschwankungen an $BF_3$ oder Cokatalysator führen zu Schwankungen in der Katalysatoraktivität und damit zu Schwankungen im Molekulargewicht der hergestellten Polyisobutene. Die Schwankungen im Molekulargewicht und die daraus resultierende Uneinheitlichkeit des Produktes (die sich in einem erhöhten Dispersitätswert niederschlägt) verschlechtern die Produktqualität.

Aufgabe der Erfindung ist es, ein Verfahren zur kontinuierlichen Herstellung von Polyisobuten durch kationische Polymerisation von Isobuten und/oder isobutenhaltigen Kohlenwasserstoffen in flüssiger Phase in Gegenwart eines Komplexes aus $BF_3$ und einem Cokatalysator bereitzustellen, wobei der $BF_3$/Cokatalysatorkomplex in situ durch Zugabe von $BF_3$ und Cokatalysator in einem Reaktionsstrom erzeugt wird, bei dem eine genauere Steuerung des Reaktionsverlaufs im Reaktor möglich ist.

Diese Aufgabe wird bei einem gattungsgemäßen Verfahren durch Zugabe von $BF_3$ und Cokatalysator über eine gemeinsame Zweistoffdüse mit einem Austritt für $BF_3$ und einem Austritt für den Cokatalysator.

Demnach betrifft die vorliegende Erfindung ein Verfahren zur kontinuierlichen Herstellung von Polyisobuten durch kationische Polymerisation von Isobuten und/oder isobutenhaltigen Kohlenwasserstoffen in flüssiger Phase in Gegenwart eines Komplexes aus $BF_3$ und wenigstens einem Cokatalysator, der vorzugsweise ausgewählt ist unter sauerstoffhaltigen Verbindungen, wobei der $BF_3$/Cokatalysatorkomplex in situ durch Zugabe von $BF_3$ und Cokatalysator in einem Reaktionsstrom erzeugt wird, dadurch gekennzeichnet, dass die Zugabe von $BF_3$ und sauerstoffhaltigem Cokatalysator in den Reaktionsstrom über eine gemeinsame Zweistoffdüse erfolgt, mit einem Austritt für $BF_3$ und einem Austritt für den sauerstoffhaltigen Cokatalysator.

Vorzugsweise sind im erfindungsgemäßen Verfahren die Austrittsöffnungen der Zweistoffdüse für Bortrifluorid und Cokatalysator in unmittelbarer räumlicher Nachbarschaft angeordnet.

Im Unterschied zum Verfahren der EP 0 628 575 A1 erfolgt die Zufuhr von Bortrifluorid und sauerstoffhaltigem Cokatalysator direkt in die Reaktionsmischung, im folgenden auch als Reaktionsstrom bezeichnet, und dies sowohl getrennt voneinander wie auch getrennt von der Zufuhr von frischem Isobuten bzw. isobutenhaltigen Kohlenwasserstoffen. Der Cokatalysator kann, sofern er unter Reaktionsbedingungen flüssig ist, in Substanz zugeführt werden, oder als flüssige Lösung in einem inerten Lösungsmittel zugeführtwerden.

Erfindungsgemäß bevorzugt ist die Zweistoffdüse im Polymerisationsreaktor stromaufwärts vom Zustrom des Isobuten bzw. der isobutenhaltigen Kohlenwasserstoffe, d.h. der Stelle, an der Isobuten oder die isobutenhaltige Kohlenwasserstoffmischung in den Polymerisationsreaktor eingebracht wird, angeordnet. Durch diese Anordnung wird jeweils frischer Katalysator an der Stelle der höchsten Monomerenkonzentration im Reaktor am und stromabwärts vom Isobutenzustrom erzeugt. Besonders trifft dies zu, wenn die Zugabe von $BF_3$ und sauerstoffhaltigem Cokatalysator benachbart zum Isobutenzustrom angeordnet ist. Vorzugsweise erfolgt bei dieser Anordnung der Zustrom des frischen Isobutens bzw. des isobutenhaltigen Kohlenwasserstoffs in einem vom $BF_3$- und Cokatalysatorzustrom erzeugten Strömungskegel. In einer bevorzugten Ausführungsform der Erfindung ist die Zweistoffdüse im Reaktor so angeordnet, dass ihre Austrittsöffnungen in Fließrichtung der Reaktionsmischung, also in Fließrichtung des Reaktionsstroms weist, um die Ausbildung eines Strömungskegels aus $BF_3$- und Cokatalysatorzustrom in Richtung des Isobutenzustroms zu gewährleisten. Die erfindungsgemäße Zweistoffdüse kann selbstverständlich auch an einer anderen Stelle im Reaktor angeordnet sein. Der Einsatz mehrerer Zweistoffdüsen ist ebenfalls möglich und häufig vorteilhaft.

Durch die erfindungsgemäß bevorzugte Anordnung der Zweistoffdüse wird eine für die Komplexbildung ausreichende lokale Konzentration von $BF_3$ und Cokatalysator erzeugt. Gleichzeitig erfolgt eine rasche Verteilung im Reaktionsstrom, wodurch die Reaktionswärme abgeführt wird. Eine Überkonzentration an unkomplexiertem $BF_3$ im Reaktionststrom wird ebenfalls vermieden. Die Gefahr einer Verschiebung von Doppelbindungen im Polymeren aufgrund einer hohen lokale Katalysatorkonzentrationen wird ebenso verhindert wie die Schwankung des Molekulargewichts.

Die Zweistoffdüse weist einen zentralen Austritt für $BF_3$ und einen ringförmigen, um den zentralen Austritt angeordneten Austritt für den sauerstoffhaltigen Cokatalysator auf. Somit bildet sich zumindest kurzfristig stromabwärts der Zweistoffdüse ein Strömungszylinder aus Cokatalysator aus, in den das $BF_3$ eingeleitet wird. Es bildet sich der Katalysatorkomplex aus, wobei eine rasche Durchmischung der Komponenten und eine Verteilung des gebildeten Bortrifluoridkomplexes im Reaktionsstrom erfolgt.

Eine enge Molekulargewichtsverteilung und ein hoher Anteil endständiger Vinylidengruppen im Polymeren wird außerdem unterstützt, wenn der Reaktionsstrom im Bereich der Zugabe von $BF_3$ und Cokatalysator sowie des Zustroms von Isobuten und/oder isobutenhaltigen Kohlenwasserstoffen eine turbulente Strömung aufweist. Maßnahmen zur Erzeugung turbulenter Strömungen sind dem Fachmann bekannt.

Das erfindungsgemäße Verfahren ist ein kontinuierliches Verfahren. Maßnahmen zur kontinuierlichen Polymerisation von Isobuten in Gegenwart von Katalysatoren aus Bortrifluorid und wenigstens einem Cokatalysator in inerten organischen Lösungsmitteln zu Polyisobuten sind an sich bekannt. Bei einem kontinuierlichen Verfahren wird kontinuierlich ein Teil der im Polymerisationsreaktor entstandenen Reaktionsmischung ausgetragen. Selbstredend wird eine dem Austrag entsprechende Menge an Einsatzmaterialien, hier Isobuten, bzw. ein isobutenhaltiger Kohlenwasserstoff, dem Polymerisationsreaktor kontinuierlich zugeführt. Das Verhältnis von der im Polymerisationsreaktor befindlichen Stoffmenge zu der Menge, die ausgetragen wird, bestimmt sich durch das Umlauf/Zulauf-Verhältnis, das bei der kontinuierlichen Polymerisation von Isobuten zu Polyisobuten in der Regel im Bereich von 1 000:1 bis 1:1, erfindungsgemäß bevorzugt im Bereich von 500:1 bis 5:1 und insbesondere im Bereich von 50:1 bis 200:1 v/v liegt. Die mittlere Verweildauer des zu polymerisierenden Isobutens im Polymerisationsreaktor kann 5 Sekunden bis mehrere Stunden betragen. Verweilzeiten von 1 bis 30 min. insbesondere 2 bis 20 min. sind besonders bevorzugt.

Die Polymerisation des Isobutens erfolgt in den für die kontinuierliche Polymerisation üblichen Reaktoren, wie Rührkesseln, Rohr-, Rohrbündel- und Schlaufenreaktoren, wobei Schlaufenreaktoren, d. h. Rohr(bündel)reaktoren mit Rührkesselcharakteristik, bevorzugt sind. Besonders günstig sind dabei Rohrreaktoren mit Rohrquerschnitten, die in Teilbereichen zu Turbulenzen führen.

Das erfindungsgemäße Verfahren wird in der Regel bei einer Polymerisationstemperatur im Bereich von -60°C bis +40°C, vorzugsweise unterhalb 0°C, besonders bevorzugt im Bereich von -5°C bis -40°C und speziell im Bereich von -10°C bis -30°C durchgeführt. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuleiten, ist die Siedekühlung. Dabei wird die freiwerdende Wärme durch Verdampfen des Isobutens und/oder anderer leichtflüchtiger Bestandteile des Isobuten-Feedstocks oder des gegebenenfalls leichtflüchtigen Lösungsmittels abgeführt. Vorzugsweise arbeitet man im erfindungsgemäßen Polymerisationsverfahren unter isothermen Bedingungen, d.h. die Temperatur der flüssigen Reaktionsmischung im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.-%, vorzugsweise im Bereich von 0,5 bis 20 Gew.-%, bezogen auf die flüssige Reaktionsphase. Bei der Herstellung von Polyisobutenen mit zahlenmittleren Molekulargewichten $\overline{M}_n$ im Bereich von 500 bis 5.000 Dalton arbeitet man insbesondere bei einer Isobutenkonzentration im Bereich von 1 bis 20 Gew.-% und besonders bevorzugt im Bereich von 1,5 bis 15 Gew.-%. Bei der Herstellung von Polyisobutenen mit einem zahlenmittleren Molekulargewicht $\overline{M}_n$ oberhalb 5.000 Dalton arbeitet man bevorzugt bei einer Isobutenkonzentration im Bereich von 4 bis 50 Gew.-%.

Der Isobutenumsatz kann prinzipiell beliebig eingestellt werden. Es versteht sich aber von selbst, dass bei sehr niedrigen Isobutenumsätzen die Wirtschaftlichkeit des Verfahrens in Frage gestellt ist, wohingegen bei sehr hohen Isobutenumsätzen von mehr als 99% die Gefahr von Doppelbindungsverschiebungen immer größer wird und kürzere Reaktionszeiten und eine verbesserte Wärmeabfuhr erforderlich werden. Üblicherweise wird der Isobutenumsatz aus diesen Gründen bis zu Werten im Bereich von 20% bis 99% geführt. Besonders bevorzugt sind Isobutenumsätze im Bereich von 70% bis 98%. Das Verfahren kann auch, wie in der WO 96/40808 beschrieben, zwei- oder mehrstufig durchgeführt werden. Ein zweistufiges Verfahren, bei dem das Restisobuten des Bauptreaktors auf ca. 0,5% im Nachreaktor abreagiert, ist eine bevorzugte Fahrweise für das erfindungsgemäße Verfahren.

Als Einsatzstoffe für das erfindungsgemäße Verfahren eignen sich sowohl Isobuten selber als auch Isobutenhaltige $C_4$-Kohlenwasserstoffströme, beispielsweise $C_4$-Raffinate, $C_4$-Schnitte aus der Isobuten-Dehydrierung, $C_4$-Schnitte aus Steamcrackern, FCC-Crackern (FCC: Fluid Catalysed Cracking), sofern sie weitgehend von darin enthaltenen 1,3-Butadien befreit sind. Erfindungsgemäß geeignete $C_4$-Kohlenwasserstoffströme enthalten in der Regel weniger als 500 ppm, vorzugsweise weniger als 200 ppm Butadien. Die Anwesenheit von Buten-1, cis- und trans-Buten-2 ist für das erfindungsgemäße Verfahren weitgehend unkritisch und führt nicht zu Selektivitätsverlusten. Typischerweise liegt die Konzentration in den $C_4$-Kohlenwasserstoffströmen im Bereich von 40 bis 60 Gew.-%. Bei Einsatz von $C_4$-Schnitten als Einsatzmaterial übernehmen die von Isobuten verschiedenen Kohlenwasserstoffe die Rolle eines inerten Lösungsmittels. Der Isobuten-Feedstock kann geringe Mengen an Kontaminanten wie Wasser, Carbonsäuren oder Mineralsäuren enthalten, ohne dass es zu kritischen Ausbeute- oder Selektivitätseinbrüchen bei der Polymerisation kommt. Dies bewirkt einen geringeren Alkohol/Etherverbrauch, der die vorgenannten Molverhältnisse zugunsten von $BF_3$ verändert. Es ist zweckdienlich, eine Anreicherung dieser Verunreinigungen in der Anlage zu vermeiden, indem man solche Schadstoffe beispielsweise durch Adsorption an festen Adsorbentien, wie Aktivkohle, Molekularsiebe oder Ionenaustauscher aus dem isobutenhaltigen Feedstock entfernt.

Für das erfindungsgemäße Verfahren sind solche Lösungsmittel oder Lösungsmittelgemische geeignet, die gegenüber den eingesetzten Reagenzien inert sind. Geeignete Lösungsmittel sind beispielsweise gesättigte Kohlenwasserstoffe, wie Butan, Pentan, Hexan, Heptan, Oktan, z.B. n-Hexan, i-Oktan, cyclo-Butan oder cyclo-Pentan, halogenierte Kohlenwasserstoffe wie Methylchlorid, Dichlormethan oder Trichlormethan sowie Mischungen der vorgenannten Verbindungen. Vorzugsweise werden die Lösungsmittel vor ihrem Einsatz im erfindungsgemäßen Verfahren von Verunreinigungen wie Wasser, Carbonsäuren oder Mineralsäuren befreit, beispielsweise durch Adsorption an festen

Adsorbentien, wie Aktivkohle, Molekularsieben oder Ionenaustauschern.

Als Rohstoff zur Herstellung der Bortrifluorid-Komplexe wird zweckmäßigerweise gasförmiges Bortrifluorid benutzt, wobei technisches, noch geringe Mengen Schwefeldioxid und $SiF_4$ enthaltenes (Reinheit: 96,5 Gew.-%), vorzugsweise aber hochreines Bortrifluorid (Reinheit: 99,5 Gew.-%) verwendet werden kann.

Geeignete Cokatalysatoren sind in der Regel sauerstoffhaltige Verbindungen, die vorzugsweise wenigstens ein zweibindiges Sauerstoffatom aufweisen. Geeignete sauerstoffhaltige Verbindungen sind neben Wasser organische Verbindungen mit bis zu 30 Kohlenstoffatomen. Beispiele hierfür sind $C_1$-$C_{30}$-Alkanole und Cycloalkanole, $C_2$-$C_{10}$-Diole, $C_1$-$C_{20}$-Carbonsäuren, $C_4$-$C_{12}$-Carbonsäureanhydride sowie $C_2$-$C_{20}$-Dialkylether. Hierunter bevorzugt werden einwertige Alkanole mit 1 bis 20 C-Atomen, insbesondere mit 1 bis 4 C-Atomen, die gegebenenfalls zusammen mit den $C_1$-$C_{20}$-Dialkylethern eingesetzt werden können. Erfindungsgemäß bevorzugt werden in Bortrifluorid-Komplex-Katalysatoren Molverhältnisse von Bortrifluorid zu sauerstoffhaltiger Verbindung im Bereich von 1:1 bis 1:10, insbesondere im Bereich von 1:1,1 bis 1:5 und speziell im Bereich von 1:1,2 bis 1:2,5. Die $BF_3$-Konzentration im Reaktor wird man in der Regel im Bereich von 0,01 bis 1 Gew.-%, bezogen auf die flüssige Reaktionsphase, insbesondere im Bereich von 0,02 bis 0,7 Gew.-% und speziell im Bereich von 0,03 bis 0,5 Gew.-% variieren.

Im erfindungsgemäßen Verfahren umfasst die sauerstoffhaltige Verbindung im Bortrifluorid-Komplex-Katalysator besonders bevorzugt wenigstens einen einwertigen, sekundären Alkohol A mit 3 bis 20 Kohlenstoffatomen. Beispielhaft für geeignete sekundäre Alkohole seien die folgenden genannt: Isopropanol, 2-Butanol, sowie ferner sec. -Pentanole, sec.-Hexanole, sec.-Heptanole, sec.-Octanole, sec.-Nonanole, sec.-Decanole oder sec.-Tridecanole. Außer einwertigen, sekundären Alkoholen können auch (poly-)Etherole des Propen- und Butenoxids erfindungsgemäß verwendet werden. Bevorzugt wird 2-Butanol und insbesondere Isopropanol verwendet.

Das mit dem erfindungsgemäßen Verfahren hergestellte Polyisobuten weist in der Regel einen Gehalt an endständigen Vinylidengruppen von über 80 Mol-% und ein mittleres Molekulargewicht von 500 bis 50.000, vorzugsweise 500 bis 5.000 auf. Insbesondere lassen sich mit dem erfindungsgemäßen Verfahren gezielt Polyisobutene mit einem mittleren Molekulargewicht im Bereich von 800 bis 3.000 Dalton, besonders bevorzugt 900 bis 2.500 Dalton herstellen. Die Dispersität $M_w/M_n$ beträgt vorzugsweise nicht mehr als 1,6.

Zur Aufarbeitung wird der Reaktionsaustrag zweckmäßigerweise in ein Medium geleitete das den Polymerisationskatalysator desaktiviert und auf diese Weise die Polymerisation abbricht. Dazu können beispielsweise Wasser, Alkohole, Acetonitril, Ammoniak oder wässrige Lösungen von Mineralbasen oder Carbonaten verwendet werden. Zuvor kann der Katalysator auch gemäß der WO 99/31151 aus dem Reaktionsstrom abgetrennt und der Polymerisationsreaktion wieder zugeführt werden. Beispielsweise kann man den so abgetrennten Bortrifluorid-Komplex-Katalysator zusammen mit dem Cokatalysator über die erfindungsgemäße Zweistoffdüse der Polymerisationsreaktion wieder zuführen.

Bei der Abtrennung des Katalysators aus dem Reaktoraustrag empfiehlt es sich, zuvor die Isobutenkonzentration im Austrag auf Werte unterhalb 2 Gew.-%, vorzugsweise 1 Gew.-% und insbesondere unterhalb 0,5 Gew.-%, bezogen auf den Austrag, abzusenken. Vorzugsweise wird man zu diesem Zweck das Polymerisationsverfahren zweistufig durchführen. Vorzugsweise wird diese zweite Polymerisationsstufe bei der gleichen Temperatur wie die erste Polymerisationsstufe oder bei einer niedrigeren Polymerisationstemperatur als die erste Polymerisationsstufe betrieben. In der Regel beträgt die Temperaturdifferenz dabei 0 bis 20 Kelvin, vorzugsweise 0 bis 10 Kelvin.

Die weitere Aufarbeitung wird in üblicher Weise durchgeführt. Das Polyisobuten wird, gegebenenfalls nach einer oder mehreren Wäschen zur Entfernung von Katalysator, destillativ von nicht umgesetztem Isobuten, Lösungsmittel und Oligomeren befreit und kann als Sumpfprodukt aus der Destillationskolonne abgezogen werden.

Durch das erfindungsgemäße Verfahren ist eine sehr genaue und schnelle Regelung der Polymerisation des Isobuten möglich, was zu einer engeren Molekulargewichtsverteilung und einem höheren Gehalt an endständigen Vinylidengruppen im Polymeren führt. Die bei der Bildung des Bortrifluoridkomplexes freiwerdende Energie wird in den Reaktionsstrom abgeführt, wodurch eine zusätzliche Kühlung in der Zuführung des Katalysators entfällt. Durch die Erzeugung des Bortrifluorid-Komplex-Katalysators direkt im Reaktionsstrom des Reaktors entfallen weiter die bei Verwendung eines vorgefertigten $BF_3$-Komplexes erforderlichen Apparaturen für seine Herstellung und seine Lagerung.

Mit dem erfindungsgemäßen Verfahren können Polyisobutene mit enger Molekulargewichtsverteilung, charakterisiert durch eine Dispersität $M_w/M_n \leq 2,0$, vorzugsweise $M_w/M_n \leq 1,8$, insbesondere $\leq 1,6$, und einem hohen Anteil d.h. $\geq 60\%$, insbesondere $\geq 70\%$, an endständigen Vinylidengruppen hergestellt werden. Das zahlenmittlere Molekulargewicht des so hergestellten Polyisobutens (bestimmt mittels Gelpermeationschromatographie gegen kommerzielle Polyisobuten-Standarts) liegt vorzugsweise im Bereich von 500 bis 5.000 Dalton, insbesondere im Bereich von 600 bis 2.000 Dalton. Selbstverständlich lassen sich nach dem erfindungsgemäßen Verfahren auch höhermolekulare Polyisobutene, d.h. mit einem zahlenmittleren Molekulargewicht von 5.000 bis 50.000 Dalton und einem vergleichbar hohen Vinyliden-Engruppengehalt und einer vergleichbaren Dispersität herstellen.

Ein weiterer Gegenstand der Erfindung betrifft eine für das erfindungsgemäße Verfahren geeignete Zweistoffdüse. Diese Zweistoffdüse weist einen Austritt für $BF_3$ und einen Austritt für sauerstoffhaltigen Cokatalysator auf, wobei der Austritt für $BF_3$ als zentrale, vorzugsweise kreisförmige oder ellipsoide Öffnung ausgebildet ist und der Austritt für

sauerstoffhaltigen Cokatalysator ringförmig um den Austritt für $BF_3$ angeordnet ist. Der für den Cokatalysator vorgesehene Austritt kann z.B. als kreisbogenförmige Öffnung ausgestaltet sein, die gegebenenfalls durch einen oder mehrere Stege unterbrochen ist. Der für den Cokatalysator vorgesehene Austritt kann auch durch mehrere Schlitze oder Öffnungen in Form radial angeordneter Kreisbögen oder Kreisbogensegmente gebildet werden. Vorzugsweise ist die Fläche der Austrittsöffnung für den Katalysator kleiner als die Querschnittsfläche der Cokatalysatorzuleitung in der Zweistoffdüse.

In einer vorteilhaften Ausführungsform ist zwischen dem Austritt für $BF_3$ und dem Austritt für sauerstoffhaltigen Cokatalysator ein radialer Abstand vorgesehen. Die Dimensionierung des radialen Abstandes hängt von den Dimensionen und der Art des Reaktors, sowie von den Bedingungen im Reaktionsstrom, z.B. der Strömungsgeschwindigkeit, ab und kann vom Fachmann durch entsprechende Versuche ermittelt werden.

Die Erfindung wird im Weiteren anhand von Beispielen sowie unter Bezugnahme auf eine beigefügte Zeichnung näher erläutert. Dabei zeigen:

Fig. 1: einen Ausschnitt aus einem Schlaufenreaktor; und

Fig. 2: eine Zweistoffdüse für das erfindungsgemäße Verfahren im Querschnitt (Fig. 2a) sowie die Austrittsöffnung (Fig. 2b)

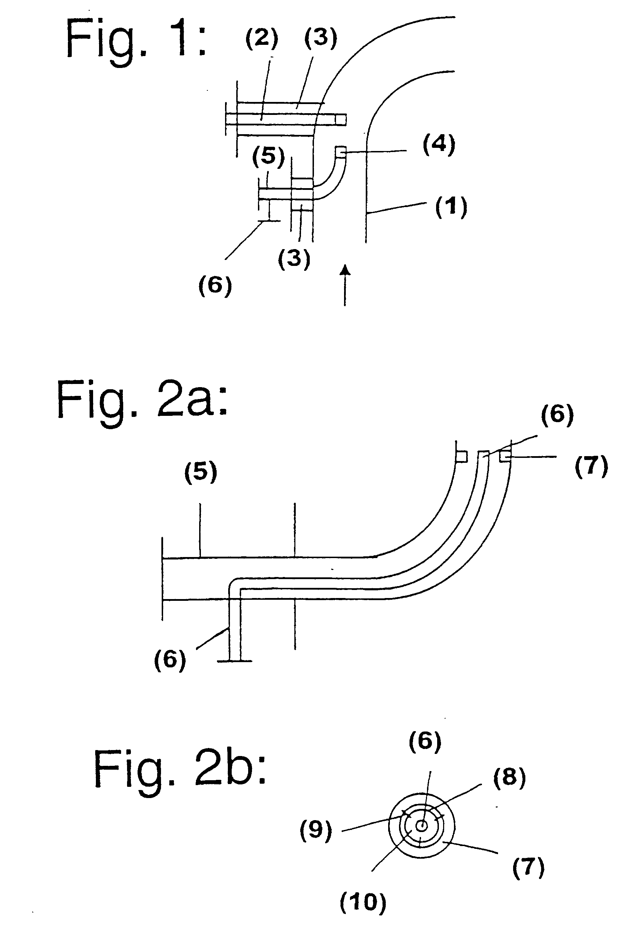

Figur 1 zeigt einen Ausschnitt aus einem Schlaufenreaktor, der für das erfindungsgemäße Verfahren ausgelegt ist. In einer Rohrleitung (1) fließt ein Reaktionsgemisch in Richtung des Pfeiles im Kreislauf. Das Reaktionsgemisch besteht in der Hauptsache aus nicht umgesetztem Isobuten, gegebenenfalls Lösungsmittel, Katalysator sowie Oligomeren und Polymeren. Über einen Zulauf (2), der mit einem Befestigungsstutzen (3) versehen ist, wird der Isobuten-Feedstock zugeführt. Dieser ist bevorzugt reines Isobuten, gegebenenfalls verdünnt mit einem inerten Lösungsmittel, kann aber auch ein isobutenhaltiges Kohlenwasserstoffgemisch, wie ein butadienarmer, isobutenreicher $C_4$-Schnitt sein. Stromaufwärts vom Zulauf (2) ist ein Zulauf (4) in Form einer erfindungsgemäßen Zweistoffdüse für die Komponenten des Bortrifluoridkatalysators angeordnet. Der Austritt des Zulaufs (4) ist nahe dem Austritt des Zulaufs (2) zentral in der Rohrleitung (1) des Schlaufenreaktors angeordnet, so dass der frisch gebildete Bortrifluoridkomplex direkt zur Eintragstelle des Isobuten-Feedstocks transportiert wird, wo die höchste Monomerenkonzentration vorliegt. Der Zulauf (4) ist als Zweistoffdüse ausgebildet und umfasst eine rohrförmige Zuleitung (5) für den Cokatalysator sowie eine rohrförmige Zuleitung (6) für das Bortrifluorid. Stromaufwärts zur Zuleitung (4) ist ein (nicht dargestellter) Abstrom für den polyisobutenhaltigen Abstrom angeordnet.

Die als Zweistoffdüse ausgebildete Zuleitung (4) ist in Figur 2 genauer dargestellt. Fig. 2a zeigt einen Schnitt durch die Zuleitung. Sie besteht aus einer rohrförmigen Zuleitung (5) für den Cokatalysator, durch deren Wandung außerhalb des Schlaufenreaktors eine Zuleitung (6) für das Bortrifluorid geführt ist. Die Rohrleitung (6) für das Bortrifluorid ist innerhalb der Rohrleitung (5) für den Cokatalysator bis zum Ausgang der Rohrleitung (5) im Inneren der Rohrleitung (1) des Schlaufenreaktors geführt. Am reaktorseitigen Ende der Rohrleitung (5) ist ein ringförmiger Einsatz (7) und gegebenenfalls ein Ringförmiger Einsatz (10) (in Fig 2a weggelassen) vorgesehen, durch den der Austrittsquerschnitt (8) der Rohrleitung (5) verringert wird. Zentral in der Öffnung des Einsatzes (7) ist der Ausgang der Rohrleitung (6) für das Bortrifluorid angeordnet. Die Rohrleitung (6) für das Bortrifluorid und Einsatz (7) und der gegebenenfalls vorhandene Einsatz (10) schließen auf gleicher Höhe ab. In Fig. 2b ist eine Aufsicht auf den Ausgang der Zweistoffdüse dargestellt. In der Außenwandung der Rohrleitung (5) für den Cokatalysator ist ein ringförmiger Einsatz (7) angeordnet. Zentral in der Öffnung des Einsatzes (7) ist der Ausgang der Rohrleitung (6) für das Bortrifluorid angeordnet. Um den Ausgang der Rohrleitung (6) ist ein ringförmiger Einsatz (10) angeordnet, so dass zwischen der äußeren Umfangfläche des Einsatzes (10) und der inneren Umfangsfläche des Einsatzes (7) ein ringförmiger Spalt (8) gebildet wird. Der Einsatz (7) ist mittels Verbindungsstegen (9) am Einsatz (10) befestigt. Beim Zulauf von Cokatalysator wird ein Strömungszylinder gebildet, in dessen Inneres das Bortrifluorid eingeleitet wird.

Beispiele

Analytik:

1. Unter endständigen Vinylidengruppierungen oder endständigen Doppelbindungen werden im Sinne der vorliegenden Anmeldung solche Doppelbindungen verstanden, deren Lage im Polyisobutenmakromolekül, durch die allgemeine Formel II

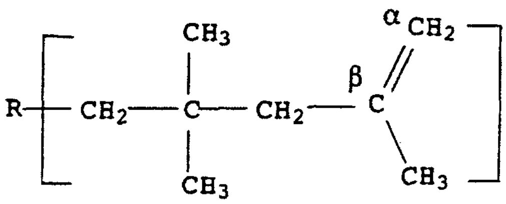

II

beschrieben wird, in der R für einen Polyisobutylenrest steht. Die Art und der Anteil der im erfindungsgemäß hergestellten Polyisobuten vorhandenen Doppelbindungen wird mit Hilfe der Methode der $^{13}C$-NMR-Spektroskopie bestimmt, wobei die beiden in Formel IIa mit $\alpha$ und $\beta$ markierten Kohlenstoffatome der endständigen Doppelbindung im $^{13}C$-NMR-Spektrum durch ihre Signale bei der chemischen Verschiebung von 143,6 bzw. 114,4 ppm identifizierbar sind und der molare Anteil der endständigen Doppelbindungen bezüglich anderer Arten von Doppelbindungen über die Ermittlung der Peakflächen der Signale in Relation zum Gesamtintegral der Olefinsignale errechnet wird.

2. Die zahlenmittleren Molekulargewichte ($M_n$) der gemäß den Beispielen hergestellten Polymere wurden mittels Gelpermeationschromatographie (GPC) bestimmt, wobei standardisierte Polyisobutene zur Eichung verwendet wurden. Aus den erhaltenen Chromatogrammen wurde das Zahlenmittel $M_n$ nach der Gleichung

$$M_n = \frac{\Sigma c_i}{\Sigma \frac{c_i}{M_i}}$$

berechnet, in der $c_i$ für die Konzentration der einzelnen Polymerspecies i im erhaltenen Polymergemisch steht und in der $M_i$ das Molekulargewicht der einzelnen Polymerspecies i bedeutet. Die Molekulargewichtsverteilung, im folgenden als Dispersizität D bezeichnet, wurde aus dem Verhältnis von Gewichtsmittel des Molekulargewichts ($M_w$) und Zahlenmittel des Molekulargewichts ($M_n$) nach der Gleichung

$$\frac{M_w}{M_n} = D$$

errechnet. Das Gewichtsmittel $M_w$ wurde aus den erhaltenen Chromatogrammen mit Hilfe der Formel

$$M_w = \frac{\Sigma c_i M_i}{\Sigma c_i}$$

bestimmt.

Beispiel 1:

In einem Schlaufenreaktor mit integrierter Umwälzpumpe wurden bei - 10°C Hexan und Isobuten im Gewichtsverhältnis 1:1,75 zugefahren. Die mittlere Verweilzeit im Reaktor lag bei etwa 8,4 min. Über eine Zweistoffdüse, die stromaufwärts des Isobutenzustroms angeordnet war, gab man je kg zugeführtem Isobuten 143 mmol Isopropanol und 89 mmol Bortrifluorid in den Reaktor. Bei der angegebenen Verweilzeit stellte sich ein Isobuten-Umsatz von 90% ein. Über einen stromaufwärts von dem $BF_3$/Isopropanol-Zustrom angeordneten Abgriff entnahm man das Reaktionsprodukt und überführte es in einen Rührbehälter, wo es zum Abbruch der Polymerisation mit 10%iger Natronlauge versetzt wurde. Nach Wäsche mit Wasser und Phasentrennung wurde die organische Phase im Vakuum bei Temperaturen oberhalb 200°C entgast. Das erhaltene Polyisobuten hatte eine Molmasse (Zahlenmittel $M_n$) von 1000 Dalton, einen Vinyliden-Endgruppengehalt > 75 Mol-% und eine Dispersizität $M_w/M_n$ im Bereich von 1,5 bis 1,8.

In analoger Weise konnte ein Polyisobuten mit einem mittleren Molekulargewicht von 2.300 (Zahlenmittel), einem Vinyliden-Endgruppengehalt > 75 Mol-% und eine Diispersizität von 1,6 bis 1,9 hergestellt werden.

## Patentansprüche

1. Verfahren zur kontinuierlichen Herstellung von Polyisobuten durch kationische Polymerisation von Isobuten und/oder isobutenhaltigen Kohlenwasserstoffen in flüssiger Phase in Gegenwart eines Komplexes aus $BF_3$ und wenigstens eines Cokatalysators, wobei der $BF_3$/Cokatalysatorkomplex in situ durch Zugabe von $BF_3$ und Cokatalysator im Reaktionsstrom erzeugt wird, **dadurch gekennzeichnet, dass** die Zugabe von $BF_3$ und Cokatalysator in den Reaktionsstrom über eine Zweistoffdüse erfolgt, die einen zentralen Austritt für $BF_3$ und einen ringförmigen, um den zentralen Austritt angeordneten Austritt für den Cokatalysator aufweist.

2. Verfahren nach Anspruch 1, **dadurch gekennzeichnet, dass** die Zugabe von $BF_3$ und Cokatalysator stromaufwärts vom Zustrom des Isobuten und/oder isobutenhaltigen Kohlenwasserstoffen in den Reaktionsstrom erfolgt.

3. Verfahren nach einem der vorhergehenden Ansprüche, **dadurch gekennzeichnet, dass** im Bereich der Zugabe von $BF_3$ und Cokatalysator sowie des Zustroms von Isobuten und/oder isobutenhaltigen Kohlenwasserstoffen der Reaktionsstrom eine turbulente Strömung aufweist.

4. Verfahren nach einem der vorhergehenden Ansprüche, **dadurch gekennzeichnet, dass** die Isobutenkonzentration im Reaktionsstrom konstant gehalten wird.

5. Verfahren nach einem der vorhergehenden Ansprüche, **dadurch gekennzeichnet, dass** der Cokatalysator ausgewählt ist unter sauerstoffhaltigen Verbindungen mit wenigstens einem zweibindigen Sauerstoffatom.

6. Verfahren nach einem der vorhergehenden Ansprüche, **dadurch gekennzeichnet, dass** das Polyisobuten einen Gehalt an endständigen vinylidengruppen von über 60 Mol.-% und ein mittleres Molekulargewicht von 500 bis 50.000, insbesondere 500 bis 5.000 aufweist.

## Claims

1. A process for the continuous preparation of polyisobutene by cationic polymerization of isobutene and/or isobutene-containing hydrocarbons in the liquid phase in the presence of a complex of $BF_3$ and at least one cocatalyst, the $BF_3$/cocatalyst complex being produced in situ by adding $BF_3$ and cocatalyst in the reaction stream, wherein $BF_3$ and cocatalyst are added to the reaction stream via a binary nozzle having a central outlet for $BF_3$ and an annular outlet, arranged around the central outlet, for the cocatalyst.

2. A process as claimed in claim 1, wherein $BF_3$ and cocatalyst are added upstream of the inflow of the isobutene and/or isobutene-containing hydrocarbons to the reaction stream.

3. A process as claimed in any of the preceding claims, wherein the reaction stream has turbulent flow in the region of the addition of $BF_3$ and cocatalyst and of the inflow of isobutene and/or isobutene-containing hydrocarbons.

4. A prpcess as claimed in any of the preceding claims, wherein the isobutene concentration in the reaction stream is kept constant.

5. A process as claimed in any of the preceding claims, wherein the cocatalyst is chosen from oxygen-containing compounds having at least one divalent oxygen atom.

6. A process as claimed in any of the preceding claims, wherein the polyisobutene contains more than 60 mol% of terminal vinylidene groups and has an average molecular weight of from 500 to 50,000, in particular from 500 to 5000.

## Revendications

1. Procédé pour la production continue de polyisobutènes par la polymérisation cationique d'isobutènes et/ou d'hydrocarbures contenant des isobutènes dans une phase liquide en présence d'un complexe de fluorure de bore et d'au moins un co-catalyseur, dans lequel le complexe fluorure de bore/co-catalyseur est produit in situ dans le flux de réaction par adjonction de fluorure de bore et d'un co-catalyseur, **caractérisé en ce que** l'adjonction de fluorure

de bore et du co-catalyseur dans le flux de réaction est effectuée au moyen d'une buse à double injection, qui comprend une sortie centrale pour le fluorure de bore ainsi qu'une sortie en forme d'anneau, disposée autour de la sortie centrale, pour le co-catalyseur.

**2.** Procédé selon la revendication 1, **caractérisé en ce que** l'adjonction de fluorure de bore et du co-catalyseur est effectuée dans le flux de réaction, en amont de l'afflux d'isobutènes et/ou d'hydrocarbures contenant des isobutènes.

**3.** Procédé selon l'une quelconque des revendications précédentes, **caractérisé en ce qu'**il comprend un écoulement turbulent dans le domaine de l'adjonction de fluorure de bore et du co-catalyseur ainsi que dans le domaine de l'afflux d'isobutènes et/ou d'hydrocarbures contenant des isobutènes du flux de réaction.

**4.** Procédé selon l'une quelconque des revendications précédentes, **caractérisé en ce que** la concentration en isobutènes est maintenue constante dans le flux de réaction.

**5.** Procédé selon l'une quelconque des revendications précédentes, **caractérisé en ce que** le co-catalyseur est choisi parmi des composés contenant de l'oxygène avec au moins un atome d'oxygène ayant deux liaisons.

**6.** Procédé selon l'une quelconque des revendications précédentes, **caractérisé en ce que** les polyisobutènes ont une teneur en groupes vinylidènes en fin de chaîne de plus de 60 % en moles ainsi qu'un poids moléculaire moyen allant de 500 à 50 000, en particulier de 500 à 5000.

Fig. 1:

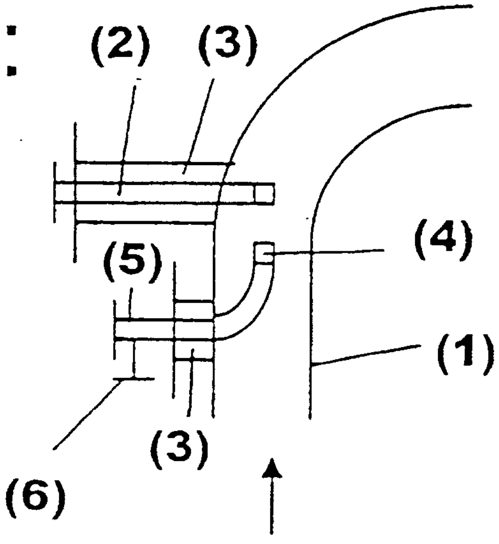


Fig. 2a:

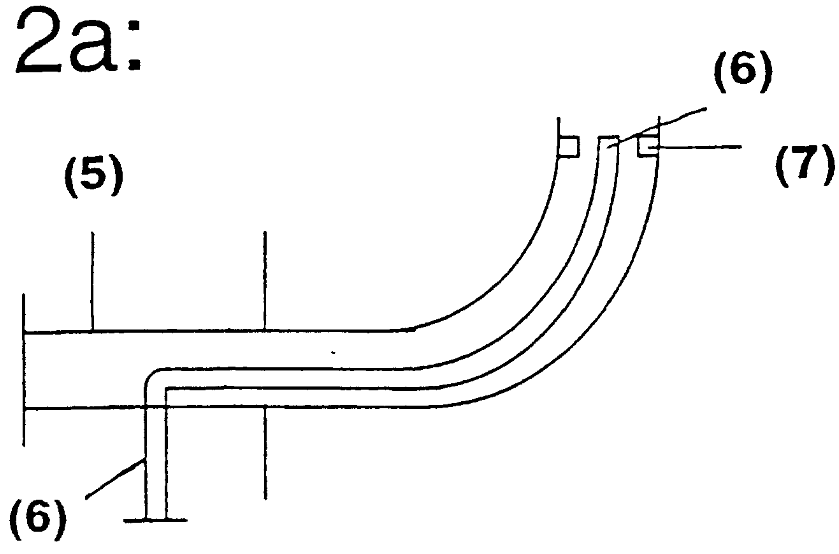


Fig. 2b: